# EUROPEAN PATENT APPLICATION

(11) **EP 0 653 453 A1**
(43) Date of publication of application: **17.05.1995**
(21) Application number: 94203208.7
(22) Date of filing: 03.11.1994
(51) Int. Cl.: C08G 81/02, C08C 19/44

(54) **Method for preparing asymmetric radial copolymers**

(30) Priority: 09.11.1993 US 149596
(71) Applicant: SHELL INTERNATIONALE RESEARCH MAATSCHAPPIJ B.V., NL-2596 HR Den Haag (NL)
(72) Inventor: Chin, Steve Soohyun, Houston, Texas 77095 (US); Hoxmeier, Ronald James, Houston, Texas 77082 (US); Spence, Bridget Ann, Houston, Texas 77098 (US)

(57) **Abstract**

A method for preparing asymmetric radial polymers wherein the different polymeric arms are contacted sequentially with a coupling agent. The method narrows the relative arm distribution of the specifically selected asymmetric radial polymers produced and significantly increases the amount of tailor made final product having the desired ratio of polymeric arms. Coupling agents having four functional groups are to be used for the preparation of said asymmetric radial polymers, containing two sets of two arms of specifically selected polymer arms.

## Description

This invention relates to a method for preparing polymers. More particularly, this invention relates to a method for preparing asymmetric radial polymers of a tailor made specifically selected molecular structure.

Heretofore, several methods have been proposed for preparing asymmetric radial polymers. As is well known in the prior art, radial polymers comprise three or more arms extending outwardly from a nucleus. The asymmetric radial polymers, generally, contain arms of at least two different polymers, which polymers may vary as to chemical composition, structure and/or molecular weights. Asymmetric radial polymers having arms of different molecular weights are sometimes referred to as polymodal polymers. A principal difference in the methods frequently used to prepare both asymmetric and polymodal radial polymers resides in the selection of a coupling agent which forms the nucleus of the radial polymer. The coupling agent may contain a fixed, though sometimes variable, number of functional sites such as the coupling agents taught in U.S. Patent Nos. 3,281,383; 3,598,884; 3,639,517; 3,646,161; 3,993,613 and 4,086,298 or the coupling agent may itself be a monomer which polymerizes during the coupling reaction such as taught in U.S. Patent No. 3,985,830.

From European Patent Application No. 0314,256 has become known in general the preparation of asymmetrical radial copolymers, containing a significantly higher amount of the desired compound having the actual specific molecular structure, at the cost of earlier coproduced other accompanying molecular structures, by applying an alternative way of reacting the previously prepared individual living polymer arms with the polyfunctional coupling agent having from three to twelve funcational groups.

A similar process was known from European Patent Application no. 0 540,109 A1, actually disclosing a method for preparing an asymmetric radial polymer, comprising subsequently reacting of living polymers, having a single reactive group and being different from each other, with a polyfunctional coupling agent, wherein the last polymer chain to be reacted with the coupling agent is contacted with the prereacted coupling agent in the presence of a polar compound, capable of modifying the amount of vinyl groups in poly(conjugated diene) polymers. In particular the preparation of asymmetric radial copolymers was disclosed, originating from the use of coupling agents having 3 or 6 functional groups.

Although the products obtainable by the generally disclosed process of said European patent applications, were found to have narrower distributions of relative arm content, leading to better performance in many end use applications, an important disadvantage of said process was the additional costs due to the multi stages and expenditure of additional reactors.

On the other hand there was still a need for further improvement of the properties of asymmetric copolymers for specific end uses by further "fine tuning" the manufacturing conditions, i.e. a balanced selection of specific living polymer arms (molecular weight microstructure), their mutuaol ratio to be coupled, the coupling sequence and the type of coupling agent to be used.

It is therefore an object of the present invention to provide an improved process for preparing tailor made asymmetrical radial polymers, wherein the relative distribution of arms within the polymer is controlled within a narrower range. It is another object of the present invention to provide asymmetrical radial polymers, having improved properties due to the tailor made structure and the narrower distribution of arms within these polymers.

As result of extensive research and experimentation such a process and the asymmetrical radial polymers aimed at, could be surprisingly found.

Accordingly one aspect of the invention is relating to a method for preparing an asymmetric radial polymer comprising the steps of
(a) contacting a first conjugated diene polymer having a single reactive end group per molecule with a coupling agent containing four functional groups which will react with the reactive end group such that said first conjugated diene polymer reacts with two of the functional groups on each molecule of the coupling agent;
(b) contacting a second conjugated diene polymer having a single reactive end group per molecule with the reaction product from step (a) under conditions such that reaction between said block polymer and the reaction product from step (a) proceeds substantially to completion; and
(c) recovering an assymmetric radial polymer having four-arm radial polymer molecules having a ratio of two polymeric arms from the first conjugated diene polymer to two polymeric arms from the second conjugated diene polymer.

The applied coupling agent may contain as functional groups halogen or alkoxy, having 1 to 4 carbon atoms and more preferably the coupling may contain four chlorine groups or methoxy groups. More preferably it is selected from SiCl₄, (CH₃O)₄Si, RCl₂Si-(CH₂)₂-SiCl₂R and R(CH₃O)₂Si-(CH₂)₂-Si(CH₃O)₂R wherein R represents a hydrocarbyl groups having from 1 to 10 carbon atoms more preferably a lower alkyl having from 1 to 6 carbon atoms.

The method is particularly suitable for the preparation of asymmetric radial polymers from so-called "living" polymers containing a single terminal metal ion. The coupling agent used in the preparation must, then, contain four functional groups which will react with the polymer at the site of the metal ion. As is well known in the prior art, "living" polymers are polymers containing at least one active group such as a metal atom bonded directly to a carbon atom. "Living" polymers are readily prepared via anionic polymerization. Since the present invention is particularly well suited to the preparation of asymmetric radial polymers using "living" polymers to form the arms thereof, the invention will be described by reference to such polymers. It will, however, be appreciated that the invention would be equally useful with polymers having different reactive groups so long as the selected coupling agent contains functional groups which are reactive with the reactive site contained in the polymer.

Living polymers containing a single terminal group are, of course, well known in the prior art. Methods for preparing such polymers are taught, for example, in U.S. Patent Nos. 3,150,209; 3,496,154; 3,498,960; 4,145,298 and 4,238,292, the disclosure of which patents are herein incorporated by reference. In general, the polymers produced with the processes taught in the foregoing patents maybe polymers of one or more conjugated dienes containing from 4 to 12 carbon atoms such as 1,3-butadiene, isoprene, piperylene, methylpentadiene, phenylbutadiene, 3,4-dimethyl-1,3-hexadiene, 4,5-diethyl-1,3-octadiene and the like, preferably those conjugated diolefins containing 4 to 8 carbon atoms. In accordance with the disclosure of at least certain of these patents, one or more of the hydrogen atoms in the conjugated diolefins may be substituted with halogen. The polymers produced by these processes may also be copolymers of one or more of the aforementioned conjugated diolefins and one or more other monomers, particularly monoalkenyl aromatic hydrocarbon monomers such as styrene, various alkyl-substituted styrenes, alkoxy-substituted styrene, vinyl naphthalene or vinyl toluene. Homopoymers and copolymers of monoalkenyl aromatic hydrocarbons can also be prepared by the method disclosed in the aforementioned patents, particularly the methods taught in U.S. Patent Nos. 3,150,209; 3,496,154; 3,498,960; 4,145,298 and 4,238,202. When the polymer product is a random or tapered copolymer, the monomers are, generally, added at the same time, although the faster reacting monomer may be added slowly in some cases, while, when the product is a block copolymer, the monomer used to form the separate blocks are added sequentially.

In general, the polymers useful as arms in both the method of this invention and the asymmetric radial polymer of this invention may be prepared by contacting the monomer or monomers with an organoalkali metal compound in a suitable solvent at a temperature within the range from about -150°C to about 300°C, preferably at a temperature within the range from about 0°C to about 100°C. Particularly effective polymerization initiators are organolithium compounds having the general formula:

RLi

Wherein:
R is an aliphatic, cycloaliphatic, alkyl-substituted cycloaliphatic, aromatic or alkyl-substituted aromatic hydrocarbon radial having from 1 to about 20 carbon atoms and preferably a tert-butyl or sec-butyl group.

Preferably the first conjugated diene polymer comprises living polyisoprene homopolymer and the second conjugated diene polymer comprises living poly(styrene)-poly(isoprene) or living poly(styrene)-poly (butadiene) diblock copolymers.

More preferably the living isoprene homopolymers have weight average molecular weights of from 1000 to 150,0000, while the living block copolymers have weight average molecular weights from 1000 to 150,000.

It will be appreciated that another aspect of the present invention is formed by an asymmetric radial polymer obtainable by a method comprising the steps of:
(a) contacting a first conjugated diene polymer having a single reactive end group per molecule with a coupling agent containing four functional groups which will react with the reactive end group such that said first conjugated diene polymer reacts with two of the functional groups on each molecule of the coupling agent;
(b) contacting a second conjugated diene polymer having a single reactive end group per molecule with the reaction product from step (a) under conditions such that reaction between said block polymer and the reaction product from step (a) proceeds substantially to completion; and
(c) recovering an asymmetric radial polymer having four-arm radial polymer molecules having a ratio of two polymeric arms from the first conjugated diene polymer to two polymeric arms from the second conjugated diene polymer;
   and by their derivatives wherein the original ethylenic unsaturation has been partially or completely hydrogenated.

Preferred asymmetric radial polymers are those, wherein the first conjugated diene polymer arm comprises polyisoprene homopolymer and wherein the second conjugated diene polymer arm comprises poly(styrene)-poly(isoprene) or poly(styrene)-poly(butadiene) diblock copolymers.

More preferred asymmetric radial polymers are those, wherein the poly(isoprene) arms have weight average molecular weights from 1000 to 150,000 and most preferably from 8,000 to 25,000 while the block copolymers arms have weight average molecular weights of the polystyrene blocks from 5000 to 100,000, and preferably from 5,000 to 15,000 and the weight average molecular weight of the poly(conjugated diene) block is in the range of from 15,000 to 150,000 and preferably from 17,000 to 30,000.

The living polymers used as arms in the asymmetric radial polymer will be contacted with the coupling agent at a temperature within the range from about 20°C to about 80°C and more preferably from 50°C to 80°C, at a pressure within the range of from about 1 bar (0 psig) to about 8 bar (100 psig) and the contacting in each step will be maintained until reaction between the arms and the coupling agent is complete, generally for a period of time with in the range from 10 to 100 minutes and preferably from 20 to 100 minutes.

The method of this invention allows for the use of more economical, commercially available coupling agents. For example, a precise asymmetric radial polymer containing two copolymer arms and two homopolymer arms may be synthesized using the described method,using the preferred coupling agents RCl₂Si(CH₂)₂SiCl₂R or R(CH₃O)₂Si(CH₂)₂Si(CH₃O)₂R,wherein R = methyl. SiCl₄ or tetramethoxysilane may be used in the second described method to produce an asymmetric radial polymer having on average two copolymer arms and two homopolymer arms. In this case, the product will, in actuality, be a mixture of asymmetric radial polymers, some having three copolymer arms and one homopolymer arm, the majority having two copolymer arms and two homopolymer arms, and some having one copolymer arm and three homopolymer arms.

In general the polymers useful as arms in the asymmetric radial polymers of the present invention will be in solution, when contacted with the coupling agent. Suitable solvents include those useful in the solution polymerization of the polymer and include aliphatic, cycloaliphatic, alkyl-substituted cycloaliphatic, aromatic and alkyl-substituted aromatic hydrocarbons, ethers and mixtures thereof. Suitable solvents, then, include aliphatic hydrocarbons such as butane, pentane, hexane or heptane, cycloaliphatic hydrocarbons such as cyclohexane, cyclopentane or cycloheptane, alkyl-substituted cycloaliphatic hydrocarbons such as methylcyclohexane, methylcycloheptane, aromatic hydrocarbons such as benzene, and alkyl-substituted aromatc hydrocarbons such as toluene or xylene, and ethers such as tetrahydrofuran, diethylether or di-n-butyl ether. Since the polymers useful in making the asymmetric radial polymers of this invention will contain a single terminal reactive group, the polymers used in the preparation of the asymmetric radial polymers will retained in solution after preparation without deactivating the reactive (living) site. In general, the coupling agent may be added to a solution of the polymer or a solution of the polymer may be added to the coupling agent.

Ether such as glyme, diethylether, dimethoxybenzene or tetramethylene ehtylenediamine are added before the second coupling step to accelerate the reaction between the last halogen on each silicon and the terminal functional group on the second polymeric arms.

Another aspect of the present invention is formed by the selectively hydrogenated derivatives of the asymmetric radial polymers as specified hereinbefore, obtainable by partial or complete selective hydrogenation of the original ethylenic unsaturation, originating from the poly(conjugated diene) blocks by methods generally known in the art.

E.g. such selective hydrogenation can be obtained by means of a nickel-aluminium catalyst or a dicylcopentadienyl-titanium complex catalyst.

The asymmetrical radial polymers of the present invention may above used in any of the applications for which asymmetric radial polymers, having the same average relative arm structure, can be used.

Special end use applications include the applications in adhesives, sealants and coatings and in particular mixed with suitably selected other tackifying resins and/or other auxiliaries; the use as viscosity index improvers, the use for impact modification of engineering thermoplastics, and the use in asphalt modification.

The invention is illustrated by the following examples, however without restricting its scope to these specific embodiments.

### Example 1

In this example, an asymmetric radial polymer, containing two isoprene homopolymer arms and two styrene-butadiene block copolymer arms was prepared. The polyisoprene arms had a weight-average molecular weight of 18,000. The block copolymer arms had a polystyrene block weight-average molecular weight of 10,400 and a polybutadiene block weight-average molecular weight of 24000. In the first step of the preparation, a sufficient amount of a living isoprene homopolymer to provide two moles of living polymer per mole of silicon tetrachloride was contacted with silicon tetrachloride at a temperature of 60°C and at ambient pressure. The living polymer was dissolved in cyclohexane at a concentration of 20 wt% of polyisoprene and the contacting was accomplished by adding the silicon tetrachloride to the polymer solution. The contacting was maintained for 60 minutes with mild agitation. Separately, a styrene-butadiene block copolymer was synthesized in the presence of 6% diethylether on a total solution basis which resulted in a 41% 1,2-butadiene content as determined by 1H NMR analysis. After reaction of the living isoprene homopolymer and the silicon tetrachloride was complete, a sufficient amount of the living styrene-butadiene block copolymer and about 300ppm glyme on a total solution basis was added to the solution to provide two moles of block copolymer per mole of silicon tetrachloride initially in solution. Contacting between the block copolymer and the reaction product from the first step was continued for 60 minutes at the same conditions used during the first contacting step. After reaction of the block copolymer and the coupling agent was completed, the asymmetric radial polymer was recovered.

The asymmetric radial polymer was then partially hydrogenated using a nickel-aluminum catalyst under conditions that do not hydrogenate aromatic double bonds and will preferentially hydrogenate polybutadiene double bonds rather than polyisoprene double bonds.

### Example 2

In this example, an asymmetric radial polymer, containing two isoprene homopolymer arms and two styrene-isoprene block copolymer arms was prepared according to the procedure of Example 2 with the following changes. The isoprene homopolymer arms had a weight-average molecular weight of 9,200. The styrene-isoprene block copolymer arms had a polystyrene block weight-average molecular weight of 6,300 and a polyisoprene block weight-average molecular weight of 22,000. In the first coupling step, the living polyisoprene was contacted with the silicon tetrachloride at 25C for 60 minutes. In the second coupling step, a sufficient amount of living styrene-isoprene block polymer, was added to the solution to provide two moles of block polymer per mole of silicon tetrachloride. After reaction of the block polymer and the coupling agent was complete, the asymmetric radial polymer was recovered.

The asymmetric radial polymer was fully hydrogenated using a nickel-aluminum catalyst under conditions that do not hydrogenate aromatic double bonds and will hydrogenate the polyisoprene double bonds.

### Example 3

In this example, an asymmetric radial polymer within the scope of the present invention containing two isoprene homopolymer arms and two styrene-butadiene block copolymer arms was prepared according to the procedure of Example 2 with the following changes. The polyisoprene arms had a weight-average molecular weight of 18,400. The styrene-butadiene block copolymer arms had a polystyrene block weight-average molecular weight of 5,500 and a polybutadiene block weight-average molecular weight of 19,400. In the first coupling step, the living polyisoprene was contacted with the silicon tetrachloride at 25°C for 60 minutes. The second coupling step was conducted at 70C for 60 minutes in the presence of 300 ppm glyme on a total solution basis. After reaction of the block polymer and the coupling agent was complete, the asymmetric radial polymer was recovered. The 1,2-butadiene content of the resulting polymer was 39.6% as determined by ¹H NMR analysis.

A portion of this asymmetric radial polymer was partially hydrogenated as indicated in Example 1 and another portion was fully hydrogenated as indicated in Example 2.

### Example 4

In this example, an asymmetric radial polymer containing two isoprene homopolymer arms and two styrene-butadiene block copolymer arms was prepared according to the procedure of Example 1 with the following changes. The polyisoprene arms had a weight-average molecular weight of 19,600. The styrene-butadiene block copolymer arms had a polystyrene block weight-average molecular weight of 5,800 and a polybutadiene block weight-average molecular weight of 21,500. The second coupling step was conducted at 70°C for 60 minutes. After reaction of the block polymer and the coupling agent was complete, the asymmetric radial polymer was recovered. The 1,2-butadiene content of the resulting polymer was 40% as determined by ¹H NMR analysis.

A portion of this asymmetric radial polymer was partially hydrogenated as indicated in Example 1 and another portion was fully hydrogenated as indicated in Example 2.

For examples 1, 2, 3, and 4, above, after reaction of the living isoprene homopolymer and the silicon tetrachloride was complete, an aliquot of the solution was removed and analyzed by Gel Permeation Chromatography to determine the relative amounts of coupling agent containing one, two and three polymer arms. This analysis allows prediction of the final polymer composition after the second coupling step is completed and in some cases is the only available method of determination since, depending upon the relative polymer arm weight average molecular weights, Gel Permeation Chromatography does not allow resolution of the various polymer components of the final product. The results of this analysis establish that the method of this invention is successful in producing a significantly narrow distribution of polymer products by complete elimination of symmetric radial polymers (those containing four homopolymer arms and no block copolymer arms or four block copolymer arms and no homopolymer arms).

### Example 5

An asymmetric radial polymer, containing two isoprene homopolymer arms and two styrene-butadiene block copolymer arms was prepared using tetramethoxysilane as the coupling agent. A small block of polybutadiene was added to the end of the isoprene homopolymer arms to provide for better coupling with the tetramethoxysilane. The polyisoprene arms had a weight-average molecular weight of 16,970 with a 1040 g/mole polybutadiene block. The block copolymer arms had a polystyrene block weight-average molecular weight of 8,650 and a polybutadiene block weight-average molecular weight of 29,900. In the first step of the preparation, a sufficient amount of a living isoprene polymer (with small polybutadiene block) to provide two moles of living polymer per mole of tetramethoxysilane was contacted with tetramethoxysilane at a temperature of 60°C and at ambient pressure. The living polymer was dissolved in cyclohexane at a concentration of 15 wt% of polymer and the contacting was accomplished by adding the tetramethoxysilane to the polymer solution. The contacting was maintained for 30 minutes with mild agitation. Separately, a styrene-butadiene block copolymer was synthesized in the presence of 6% diethylether on a total solution basis which resulted in a 38% 1,2-butadiene content as determined by 'H NMR analysis. After reaction of the living isoprene polymer (with small polybutadiene block) and the tetramethoxysilane was complete, a sufficient amount of the living styrene-butadiene block copolymer and about 600 ppm glyme on a total solution basis was added to the solution to provide two moles of block copolymer per mole of tetramethoxysilane initially in solution. Contacting between the block copolymer and the reaction product from the first step was continued for 60 at 80°C. After reaction of the block copolymer and the coupling agent was completed, the asymmetric radial polymer was recovered.

The asymmetric radial polymer was partially hydrogenated with a nickel-aluminium catalyst that does not hydrogenate aromatic double bonds and preferentially hydrogenate polybutadiene double bonds rather than polyisoprene double bonds.

### Example 6

An asymmetric radial polymer containing two isoprene homopolymer arms and two styrene-butadiene block copolymer arms was prepared using tetramethoxysilane as the coupling agent. A small block of polybutadiene was added to the end of the isoprene homopolymer arms to provide for better coupling with the tetramethoxysilane. The polyisoprene arms had a weight-average molecular weight of 17,600 with a 1050 g/mole polybutadiene block. The block copolymer arms had a polystyrene block weight-average molecular weight of 9,150 and a polybutadiene block weight-average molecular weight of 22,500. In the first step of the preparation, a sufficient amount of a living isoprene polymer (with small polybutadiene block) to provide two moles of living polymer per mole to tetramethoxysilane was contacted with tetramethoxysilane at a temperature of 60°C and at ambient pressure. The living polymer was dissolved in cyclohexane at a concentration of 15 wt% of polymer and the contacting was accomplished by adding the tetramethoxysilane to the polymer solution. The contacting was maintained for 30 minutes with mild agitation. Separately, a styrene-butadiene block copolymer was synthesized in the presence of 6% diethylether on a total solution basis which resulted in 37% 1,2-butadiene content as determined by 'H NMR analysis. After reaction of the living isoprene polymer (with small polybutadiene block) and the tetramethoxysilane was complete, a sufficient amount of the living styrene-butadiene block copolymer and about 600 ppm glyme on a total solution basis was added to the solution to provide two moles of block copolymer per mole of tetramethoxysilane initially in solution. Contacting between the block copolymer and the reaction product from the first step was continued for 60 minutes at 80°C. After reaction of the block copolymer and the coupling agent was completed, the asymmetric radial polymer was recovered.

The asymmetric radial polymer was partially hydrogenated with a nickel-aluminum catalyst under conditions that do not hydrogenate aromatic double bonds and preferentially hydrogenate polybutadiene double bonds before polyisoprene double bonds.

The same asymmetric radial polymer as obtained according to the Examples 1-6, also can be produced, by using instead of silicon tetrachloride or silicon tetra methoxy as coupling agent 1,2 bis(methyldimethoxy silyl)ethane or 1,2 bis(methyl dichloro silyl) ethane,providing a higher content of the desired asymmetric.

## Claims

1. A method for preparing an asymmetric radial polymer comprising the steps of:
(a) contacting a first conjugated diene polymer having a single reactive end group per molecule with a coupling agent containing four functional groups which will react with the reactive end group such that said first conjugated diene polymer reacts with two of the functional groups on each molecule of the coupling agent;
(b) contacting a second conjugated diene polymer having a single reactive end group per molecule with the reaction product from step (a) under conditions such that reaction between said block polymer and the reaction product from step (a) proceeds substantially to completion; and
(c) recovering an asymmetric radial polymer having four-arm radial polymer molecules having a ratio of two polymeric arms from the first conjugated diene polymer to two polymeric arms from the second conjugated diene polymer.

2. The method of Claim 1 wherein the first conjugated diene polymer comprises living isoprene homopolymer and the second conjugated diene polymer comprises living polystyrene-polyisoprene or living polystyrene-polybutadiene diblock copolymers.

3. The method of Claim 1 and 2 wherein said coupling agent contains four chlorine functional groups.

4. The method of Claims 2 and 3 wherein the living isoprene homopolymers have weight average molecular weights from 1,000 to 150,000, the living block copolymers have weight average molecular weights from 1,000 to 150,000.

5. An asymmetric radial polymer obtainable by a method comprising the steps of:
(a) contacting a first conjugated diene polymer having a single reactive end group per molecule with a coupling agent containing four functional groups which will react with the reactive end group such that said first conjugated diene polymer reacts with two of the functional groups on each molecule of the coupling agent;
(b) contacting a second conjugated diene polymer having a single reactive end group per molecule with the reaction product from step (a) under conditions such that reaction between said block polymer and the reaction product from step (a) proceeds substantially to completion; and
(c) recovering an asymmetric radial polymer having four-arm radial polymer molecules having a ratio of two polymeric arms from the first conjugated diene polymer to two polymeric arms from the second conjugated diene polymer;
and their derivatives, wherein the original ethylenic unsaturation has been partially or completely hydrogenated.

6. The asymmetric radial polymer of Claim 5 wherein the first conjugated diene polymer comprises living isoprene homopolymer and the second conjugated diene polymer comprises living polystyrene-polyisoprene or living polystyrene-polybutadiene diblock copolymers.

7. The asymmetric radial polymer of Claims 5 and 6 wherein the living isoprene homopolymers have weight average molecular weights from 1,000 to 150,000, the living block copolymers have weight average molecular weights from 1,000 to 150,000.
